# EUROPEAN PATENT SPECIFICATION

(11) **EP 4 071 950 B1**
(45) Date of publication and mention of the grant of the patent: **14.05.2025**
(21) Application number: 22162748.2
(22) Date of filing: 17.03.2022
(51) Int. Cl.: H02G 5/02, H02B 1/21

(54) **IMPROVED MOUNTING SYSTEM FOR BUSBARS OF AN ELECTRICAL SWITCHGEAR**
VERBESSERTES MONTAGESYSTEM FÜR SAMMELSCHIENEN EINER ELEKTRISCHEN SCHALTANLAGE
SYSTÈME DE MONTAGE AMÉLIORÉ POUR BARRES OMNIBUS D'UN APPAREIL DE COMMUTATION ÉLECTRIQUE

(30) Priority: 08.04.2021 GB 202104971
(43) Date of publication of application: 12.10.2022
(73) Proprietor: Eaton Intelligent Power Limited, Dublin 4 (IE)
(72) Inventor: Gattringer, Thomas, 3943 Schrems (AT); Muellner, David, 3950 Gmünd (AT)
(74) Representative: Seymour-Pierce, Alexandra Isobel

(56) References cited:
- DE-U- 7 031 014
- DE-U1- 202006 005 088
- - SOCOMEC: "CATALOGUE EXTRACT 2016 Busbar supports", 31 August 2016 (2016-08-31), XP055950781, Retrieved from the Internet <URL:http://techmech.yolasite.com/resources/SOCOMEC%20Busbar%20supports.pdf> [retrieved on 20220811]

## Description

### TECHNICAL FIELD

The invention relates to a mounting system for busbars of an electrical switchgear, which comprises a plurality of holder rails, connection profiles to interconnect the holder rails and to effect a distance between the holder rails and which comprises a plurality of busbar holders, which are provided to receive the busbars and which are arranged in the holder rails. Moreover, the invention relates to an arrangement with a plurality of busbars and a mounting system of the above kind, by which the busbars are fixed. Finally, the invention relates to an electrical switchgear, which comprises a number of busbars, at least one switching device electrically connected to the busbars and a mounting system of the above kind, by which the busbars are held in position within the electrical switchgear.

### BACKGROUND ART

A mounting system of the above kind in principle is known in prior art. Usually, the holder rails are made of metal and the busbar holders are made of plastic so as to provide electrical insulation between the bus bar holders and thus between the busbars held by the busbar holders. However, such a solution has number of drawbacks. First, the busbar holders are relatively soft and often cannot absorb the forces, which are induced by the busbars, in particularly in case of short circuit, in which the busbars are heavily pressed against the busbar holders, Second, although there is an insulation between the busbars and the busbar holders, nonetheless currents can flow in the metallic bus bar holders because of the electromagnetic field surrounding the busbars, which are usually flown through by an alternative current. These induced currents in the bus bar holders can have an unwanted effect within a switchgear.

To avoid these issues, it is known to use mounting systems with plastic holder rails and metal busbar holders instead.

DE 20 2006 005088 U1 discloses a busbar retention device for power busbars which has a first and a second rail holder designed for common clamp-type gripping around the power busbars. The first and second holder rails are formed from plastic, and comprise busbar holders made from a metallic material, specifically non-magnetic, e.g. of special steel.

Socomec ("CATALOGUE EXTRACT 2016 Busbar supports", URL: https://techmech.yolasite.com/resources/SOCOMEC%20Busbar%20supports.pdf XP055950781) discloses insulating busbar supports comprising plastic holder rails and metallic (copper) busbar holders, see pages 4-5.

DE 70 31 014 U discloses a separator for selectively separating and bridging the rail ends of busbars, consisting of a movable bridge that can be clamped to the rail ends and a lower part for supporting the rail ends. This clamping support also comprises holder rails made of plastic and busbar holders made of metal.

### DISCLOSURE OF INVENTION

Accordingly, an object of the invention is the provision of an improved mounting system, an improved arrangement with such a mounting system and an improved switchgear. In particular, a solution shall be proposed, which inter alia better absorbs forces induced by the busbars and which avoids induced currents or eddy currents in the mounting system.

The object of the invention is solved by a mounting system as disclosed in claim 1. Advantageous configurations of the mounting system are disclosed in the dependent claims.

Moreover, the object of the invention is solved by an arrangement with a plurality of busbars and a mounting system of the above kind, by which the busbars are fixed. Finally, the object of the invention is solved by an electrical switchgear, which comprises a number of busbars, at least one switching device electrically connected to the busbars and a mounting system of the above kind, by which the busbars are held in position within the electrical switchgear.

Choosing materials in the proposed way provides the advantage that the busbar holders are comparably robust and easily withstand the (electromagnetic) forces occurring in a switchgear. Because the contact surface between a busbar holder and a holder rail is comparably large, in addition those high forces can easily be transferred from the busbar holder to the holder rail, despite the fact that the holder rail is made from plastic. Moreover, the holder rail provides electrical insulation and hence also avoids induced eddy currents caused by the current through the busbars. A closed ferrous material loop around the busbars is avoided naturally by the non-ferrous material of the proposed holder rail. This is not the case for prior art holder rails made of metal where special measures have to be taken to avoid such a ferrous material loop and to avoid or at least limit said induced currents or eddy currents.

In particular, the holder rails can be made from fiber reinforced resin and particularly by use of pultrusion. Pultrusion provides the advantage that areas of different fiber density can be defined within the holder rails. Hence, the holder rails can be made more robust where it is desired. Pultrusion provides the further advantage that holder rails can be produced in standard lengths (several meters) and can be cut later on as desired to fit in any application. Accordingly, the mounting system can be adapted to different numbers of busbars easily.

The connection profiles can be produced in standard lengths (several meters) by use of pultrusion and can be cut as desired to fit in any application as well. Accordingly, the mounting system can be adapted to different heights of the busbars easily. The connection profiles can be made of plastic or of metal.

Hence, one further advantage of the proposed solution is that a big range of busbar dimensions and/or busbar configurations can be covered by the mounting system although the parts which are used therefore basically remain the same for all these busbar dimensions and/or busbar configurations. So, flexibility of the mounting system is increased at reduced costs compared to prior art systems.

Further advantageous embodiments are disclosed in the dependent claims and in the description as well as in the figures.

Advantageously, the holder rails are strut profiles with an H cross section. In this way, on the one hand, busbar holders can be received in one opening of the "H" and means for mounting the busbar holders, e.g. busbar holder screws or rivets, can be received in the opposite opening of the "H". So, in particular the heads of the mounting means, e.g. the heads of the busbar holder screws or rivets, are located in a groove so as to provide protection against unintentional contact by personnel. It should be noted in this context, that mounting means can be under voltage if they are made from metal, if no other measures are be taken to avoid that. Moreover, a H cross section beneficially provides good stiffness against deflection. It should be noted that although the use of a H profile is beneficial, other shapes can be used as well for the holder rails. For example, the holder rails can have a U cross section or a square pipe cross section.

In a further advantageous embodiment of the mounting system, the H cross section of the holder rails comprises grooves on both sides of the bottom region facing the busbar holders. In particular, protrusions on the busbar holders or on other equipment, which can be fixed to the holder rails, can reach into the grooves. Hence a busbar holder or other equipment can be snapped in a holder rail so that it does not fall out of the holder rail unintentionally until the busbar holder or other equipment is finally fixed to the holder rail by mounting means, e.g. by busbar holder screws or rivets. This is particularly helpful if a busbar holder or other equipment shall be mounted to a holder rail upside down.

The busbar holders are strut profiles with a square pipe cross section and with cutouts for the busbars. Accordingly, the busbar holders can easily cut off from standard profiles and can be manufactured at low cost. The cutouts form recesses for receiving the busbars. Beneficially, the cutouts are made by a laser, but however other production techniques are applicable as well. A further advantage of the square pipe cross section is that it leads to comparably robust busbar holders. Moreover, different busbar arrangements with different numbers of busbars per busbar holder can be realized easily. The only thing that varies in that respect is the number of cutouts per busbar holder and/or the length of the busbar holder. So, a busbar holder can have one cutout for one busbar, two cutouts for two busbars and so on.

Generally (meaning despite a special shape), the busbar holders can be coated/painted in order to reduce friction between the busbar holders and the busbars, to provide electrical isolation and/or to mark each electrical phase with a separate color. For example, one busbar can have blue color, one busbar can have brown color and so on. In order to provide a better adhesion of the coating, the base material of the busbar holder can have a rough surface. Such a rough surface can be made by sandblasting for example, but also by means of a laser, which burns small pits into the surface of the base material of the busbar holder. In particular, the same laser can be used therefor, which is also used for cutting the cutout. It is also possible, that only surfaces of the busbar holder are provided with these pits which potentially get into contact with other parts. Hence, in particular the edges of the cutouts can be provided with pits to locally improve adhesion there.

In a very advantageous embodiment, a top region of the cutout has convex or curved sections on both sides. These convex or curved sections provide a number of advantages. First, inserting a busbar into a cutout is eased because the risk for wedging is reduced, even if only a small gap is provided between the busbar and the busbar holder. Second, the surface of a busbar is not scratched when the busbar moves in longitudinal direction, in particular during assembly of the mounting system. This is particularly useful if the busbars are coated, because the coating is not scratched either. The convex or curved sections can also have additionally chamfers or radii in order to further improve the above effects. Third, the busbars can be bent without causing excessive pressure on the vertical edges of the cutouts. Such a bending for example can occur when high electromagnetic forces act on the busbars. Fourth, even excessive pressure on the convex or curved sections does not lead to a collapse of the busbar holder because the material choice does avoid that. In detail, metals and in particular steel have a large range of plastic deformation beyond elastic deformation. Hence, if a busbar is pressed heavily against the convex or curved sections, the material of the busbar holder can plastify locally, but it does not collapse as whole. For example, such pressure can occur in case of excessive currents in the busbar and the resulting electromagnetic forces resulting thereof during a short circuit. Plastification, however, usually is no big problem because it is allowed based on the standard IEC 61439-1/2 as long as there are no visible cracks on the part. Moreover, this local plastification has two further effects, which positively influence the stability of the busbar holder. First, the strength of the material of the busbar holder is locally increased. This is an effect that is known from cold working and for example is used for cold rolled steel. Second, the convex or curved sections is flattened a bit so that the area effective for surface pressure is increased. In turn, surface pressure is reduced provided that the level of force is kept the same. So, these effects lead to a reduced risk for further plastification of the convex or curved sections. In other words, an equilibrium is reached where the busbar holder can withstand the forces within the mounting system without further deformation. Basically, this adaption is made "automatically" or strictly speaking by means of the special shape on the sides of the cutout.

In yet another very advantageous embodiment, a bottom region of the cutout has a flat or convex elevation with rounded corners on both sides of the elevation. Further on, it is of advantage if the holder rails in the mounted state of the mounting system reach over the elevations of the busbar holders. On the one hand, a busbar can easily slide over the holder rail because of the favorable friction coefficient between metal and plastic. On the other hand, if the holder rail locally collapses because of material fatigue, the elevation in the busbar holder forms a hard stop for the busbar. So, a critical damage of the mounting system can be avoided. Furthermore, the elevation in the busbar holder does also form a hard stop if the busbar holder itself is deformed by excessive forces acting on the busbar held by the busbar holder. Such excessive forces can cause a deformation in a way that a longitudinal axis of the busbar holder becomes arc shaped. For example, this may happen if more than one busbar with the same voltage level is arranged in a busbar holder. During short circuit, the busbars of a busbar holder are exposed to different forces what leads to an asymmetric load on the busbar holder. Accordingly, a torque is induced in the busbar holder. If this torque is very high, there is a risk that the fixing of the busbar holder in the holder rail fails (or is missing because e.g. a busbar holder screw or rivet fall of the mounting system during operation) what in turn causes said bending of the busbar holder. Accordingly, the elevation or ridge moves towards the busbar. Once the elevation touches the busbar, a further deformation of the busbar holder is avoided or at least hindered. So, the elevation does also act as a hard stop for the busbar holder itself. Beneficially, the rounded corners avoid the formation of cracks in the corners of the cutout, not only but particularly in this scenario. So, the mounting system is fault tolerant very much and even a failing or missing fixing of the busbar holder does not lead to a collapse of the whole mounting system.

Furthermore, it is particularly advantageous if the busbar holders are fixed to the holder rails by mounting means, which are embodied as self-cutting busbar holder screws. The use of self-cutting busbar holder screws provides a number of advantages. First, no separate thread has to be cut into the busbar holders because a self-cutting busbar holder screw cuts the thread itself. Second, a self-cutting busbar holder screw does not turn out on its own easily, even if the mounting system is exposed to vibrations like they occur within a switchgear. Hence, an additional screw locking can be omitted. Third, self-cutting busbar holder screws can be made shorter than screws, which are fixed by a nut. Accordingly, even if a busbar holder screw falls off from the mounting system, the likelihood for an arc flash or short circuit caused by the busbar holder screws is comparably low. This is based on the simple reason that a self-cutting busbar holder screw is shorter than a screw fixed by a nut and cannot bridge large gaps between conductors under voltage.

In yet another advantageous embodiment, a self-cutting busbar holder screw of the self-cutting busbar holder screws has a threaded portion and an unthreaded portion, wherein the outer diameter of the threaded portion is smaller than the diameter of the unthreaded portion and wherein the threaded portion is screwed into a busbar holder of the busbar holders and the unthreaded portion is located within a holder rail of the holder rails. In detail, the threaded portion is screwed into a busbar holder hole of a busbar holder and the unthreaded portion is located in a holder rail hole of a holder rail. Because the diameter of the unthreaded portion is comparably large, a surface pressure on and a shear stress in a holder rail are comparably low so that high forces can be transferred between the busbar holder screw and a holder rail. This is true even though the holder rail is made of plastic. A busbar holder screw as defined hereinbefore can also be seen as a kind of a shoulder screw.

In an alternative advantageous embodiment, the busbar holders are fixed to the holder rails by mounting means, which are embodied as rivets, in particular as snap in rivets. In this way, the assembly of the mounting means always can happen from above, even if the busbar holder is oriented in the upright position. In this case, the rivet is inserted through the cutout in the busbar holder, and the head of the rivet is located within the busbar holder in the mounted state. If the busbar holder is oriented upside down, then the rivet is inserted through a mounting hole in the holder rail. In neither case, the rivet can fall off by accident easily.

Further on, it is of advantage if mounting means for a busbar holder of the busbar holders are located at different distances from and/or at different sides of a longitudinal axis of the holder rail, which said busbar holder is fixed to. In this way, the risk for crack formation in the holder rail can be reduced.

Finally, it is beneficial if a width of the busbar holders is slightly below the inside dimension of the H cross section of the holder rail. Accordingly, a busbar holder can be mounted to a holder rail easily. However, it could also be useful if the width of the busbar holder is slightly above the inside dimension of the H cross section of the holder rail. A busbar holder is held in a holder rail by friction then. So, the busbar holder does not fall out of the holder rail unintentionally until the busbar holder is finally fixed to the holder rail by mounting means, e.g. by busbar holder screws or rivets. This is particularly helpful if a busbar holder or other equipment shall be mounted to a holder rail upside down. In any case where the width of the busbar holders matches the inside dimension of the H cross section, a rotation of the busbar holder is avoided, even if just a single busbar holder screw is used to fix the busbar holder or even if mounting means for the busbar holder, e.g. by busbar holder screws or rivets, unintentionally fall of the mounting system during operation. So, the mounting system is fault tolerant very much, and the holder rail acts as a kind of an assembly jig during assembly what eases manufacturing the mounting system.

### BRIEF DESCRIPTION OF DRAWINGS

The invention now is described in more detail hereinafter with reference to particular embodiments, which the invention however is not limited to.
- Fig. 1: shows the mounting system for busbars in mounted state of the busbars in perspective view;
- Fig. 2: shows the mounting system of Fig. 1 in exploded view;
- Fig. 3: shows a detailed perspective view of a busbar holder;
- Fig. 4: shows a top view of the busbar holder of Fig. 3;
- Fig. 5: shows front view of a busbar holder and busbars mounted to the holder rail;
- Fig. 6: shows the arrangement of Fig. 5 in cross sectional view;
- Fig. 7: shows a holder rail in top view;
- Fig. 8: shows a cross sectional view of a busbar holder screwed to a holder rail and

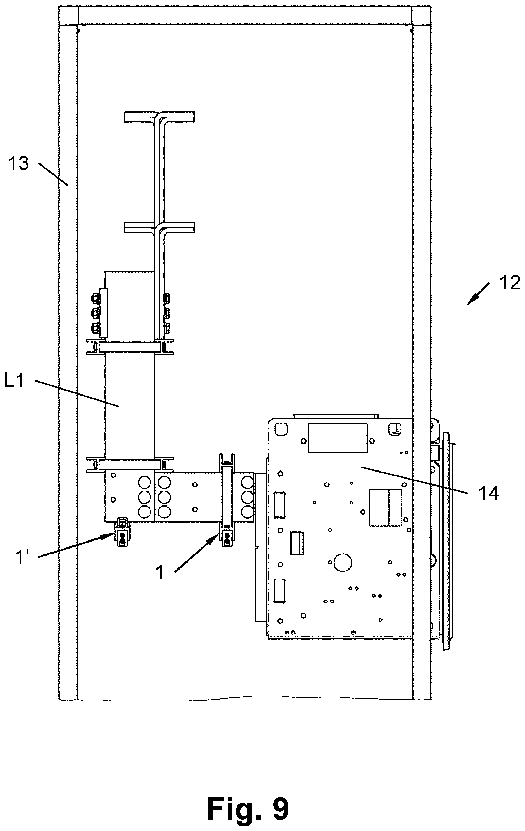

- Fig. 9: shows a partial side view of a switchgear.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure, and indication of the orientation and/or relative position has to be amended in different figures accordingly as the case may be.

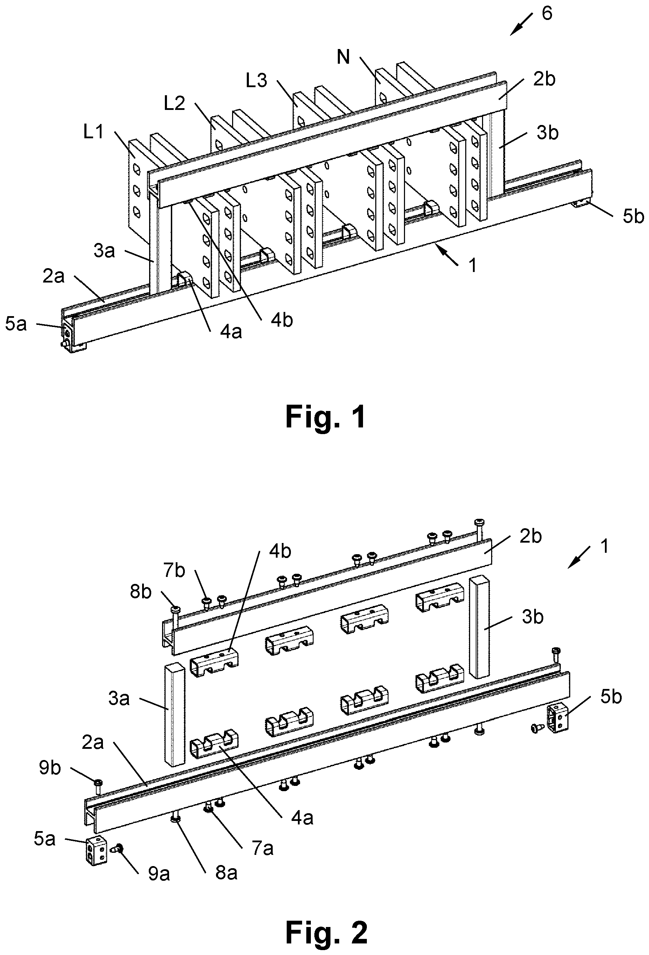

Figs. 1 and 2 show a mounting system 1 for busbars L1..L3, L1', N of an electrical switchgear in perspective view. Fig. 1 shows the mounting system 1 in mounted view and Fig. 2 in exploded view.

The mounting system 1 comprises two holder rails 2a, 2b, connection profiles 3a, 3b to interconnect the holder rails 2a, 2b and to effect a distance between the holder rails 2a, 2b and comprises a plurality of busbar holders 4a, 4b, which are provided to receive the busbars L1..L3, L1', N and which are arranged in the holder rails 2a, 2b. The holder rails 2a, 2b are made of plastic and the busbar holders 4a, 4b are made of metal. In this example there is a lower holder rail 2a and an upper holder rail 2b as well as a left connection profile 3a and right connection profile 3b. However, there could also be more holder rails 2a, 2b and/or more connection profiles 3a, 3b. Further on, the mounting system 1 comprises frame connectors 5a, 5b, by which the holder rail 2a and thus the whole mounting system 1 can be fixed to the frame of a switchgear. Together with the busbars L1..L3, L1', N the mounting system 1 forms an arrangement 6. In this example the busbars L1..L3, L1', N form three phases and a neutral line of an AC system. However, other configurations are possible equally.

Fig. 2 shows how the parts of the mounting system 1 can be interconnected. In detail, the busbar holders 4a, 4b are mounted to the holder rails 2a, 2b by busbar holder screws 7a, 7b, the connection profiles 3a, 3b are mounted to the holder rails 2a, 2b by connection profile screws 8a, 8b, and the frame connectors 5a, 5b can be mounted to the holder rails 2a and a switchgear frame by frame connector screws 9a, 9b.

In particular, the holder rails 2a, 2b can be made from fiber reinforced resin and particularly by use of pultrusion. Pultrusion provides the advantage that areas of different fiber density can be defined within the holder rails 2a, 2b. Hence, the holder rails 2a, 2b can be made more robust where it is desired. Pultrusion provides the further advantage that holder rails 2a, 2b can be produced in standard lengths and can be cut later as desired to fit in any application. Accordingly, the mounting system 1 can be adapted to different numbers of busbars L1..L3, L1', N easily.

The connection profiles 3a, 3b can be produced in standard lengths by use of pultrusion and can be cut as desired to fit in any application as well. Accordingly, the mounting system 1 can be adapted to different heights of the busbars L1..L3, L1', N easily. The connection profiles 3a, 3b can be made of plastic or of metal.

Hence, one advantage of the proposed solution is that a big range of busbar dimensions and/or busbar configurations can be covered with the mounting system 1 although the parts which are used therefore basically remain the same for all these busbar dimensions and/or busbar configurations. So, flexibility of the mounting system 1 is increased at reduced costs compared to prior art systems.

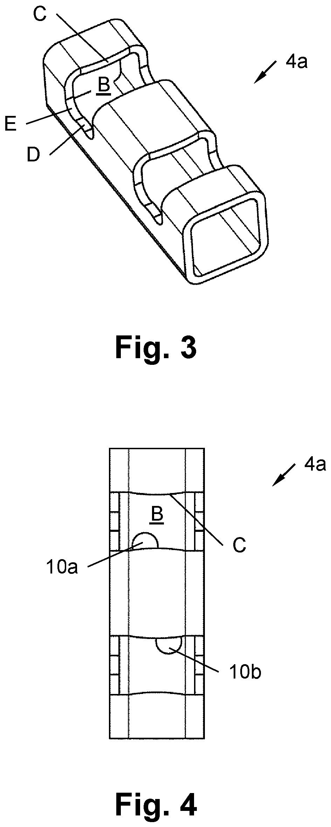

Figs. 3 and 4 show the busbar holder 4a in more detail. Fig. 3 shows a perspective view of the busbar holder 4a and Fig. 4 shows a top view of the busbar holder 4a.

The busbar holder 4a is a strut profile with a square pipe cross section and with cutouts B for the busbars L1..L3, L1', N. Accordingly, the busbar holder 4a can easily cut off from a standard profile and can be manufactured at low cost. The cutouts B form recesses for receiving the busbars L1..L3, L1', N. Beneficially, the cutouts B are made by a laser, but however other production techniques are applicable as well. A further advantage of the square pipe cross section is that the busbar holder 4a is comparably robust.

The busbar holder 4a has two cutouts B, but other numbers of cutouts B are possible as well. So, different busbar arrangements with different numbers of busbars L1..L3, L1', N per busbar holder 4a can be realized easily. The only thing that varies in that respect is the number of cutouts B per busbar holder 4a and/or the length of the busbar holder 4a.

It should be noted that although Figs. 3 and 4 depict only one busbar holder 4a, the other busbar holders 4a, 4b preferably look the same. Accordingly, the technical disclosure, which is related to the busbar holder 4a, equally relates to the busbar holder 4b.

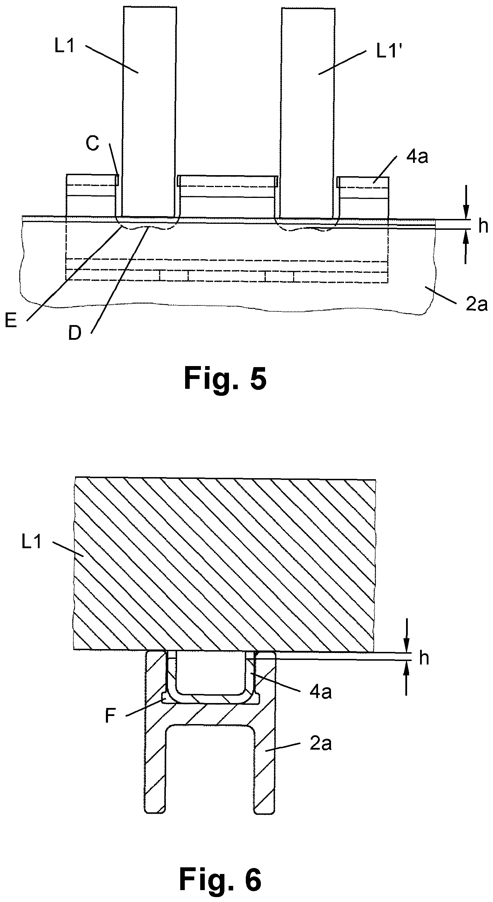

The function of the busbar holder 4a is now explained in more detail by additional use of Figs. 5 and 6. Fig. 5 shows a front view of a cut out of the mounting system 1, concretely the busbar holder 4a being mounted in the lower holder rail 2a and with the busbars L1, L1' being received.

Advantageously, a top region of the cutout B has convex or curved sections C on both sides which provide a number of advantages. First, inserting a busbar L1, L1' into the cutout B is eased because the risk for wedging is reduced, even if just a small gap is provided between the busbar L1, L1' and the busbar holder 4a.

Second, the surface of a busbar L1, L1' is not scratched when the busbar L1, L1' moves in longitudinal direction, in particular during assembly of the mounting system 1. This is particularly useful if the busbars L1, L1' are coated, because the coating is not scratched either. The convex or curved sections C can also have additionally chamfers or radii on the top and bottom edge in order to further improve the above effects.

Third, the busbars L1, L1' can be bent without causing excessive pressure on the vertical edges of the cutouts B. Such a bending for example can occur when high electromagnetic forces act on the busbars L1, L1'.

Fourth, even excessive pressure on the convex or curved sections C does not lead to a collapse of the busbar holder 4a because the material choice does avoid that. In detail, metals and in particular steel have a large range of plastic deformation beyond elastic deformation. Hence, if the busbar L1, L1' is pressed heavily against the convex or curved sections C, the material of the busbar holder 4a can plastify locally, but it does not collapse as whole. For example, such pressure can occur in case of excessive currents in the busbar L1, L1' and the resulting electromagnetic forces resulting thereof during a short circuit. Plastification, however, usually is no big problem because it is allowed based on the standard POV IEC 61439-1/2 as long as there are no visible cracks on the part. Moreover, this local plastification has two further effects, which positively influence the stability of the busbar holder 4a. First, the strength of the material of the busbar holder 4a is locally increased. This is an effect that is known from cold working and for example is used for cold rolled steel. Second, the convex or curved sections C is flattened a bit so that the area effective for surface pressure is increased. In turn, surface pressure is reduced provided that the level of force is kept the same. So, these effects lead to a reduced risk for further plastification of the convex or curved sections C. In other words, an equilibrium is reached where the busbar holder 4a can withstand the forces within the mounting system 1 without further deformation. Basically, this adaption is made "automatically" or strictly speaking by means of the special shape on the sides of the cutout B.

Advantageously, the cutout B has a flat or convex elevation D, in particular with rounded corners E on both sides of the elevation D. Moreover, it is of advantage if the holder rail 2a reaches over the elevations D of the busbar holder 4a in the mounted state of the mounting system 1, i.e. when the busbar holder 4a is mounted to the holder rail 2a. So, there is a height difference h between the elevation D and the busbar L1, L1' and between the elevation D and the upper edge of the holder rail 2a.

On the one hand, the busbar L1, L1' can easily slide over the holder rail 2a because of the favorable friction coefficient between metal and plastic. On the other hand, if the holder rail 2a locally collapses because of material fatigue, the elevation D in the busbar holder 4a forms a hard stop for the busbar L1, L1'. So, a critical damage of the mounting system 1 can be avoided. Furthermore, the elevation D in the busbar holder 4a does also form a hard stop if the busbar holder 4a itself is deformed by excessive forces acting on the busbar L1, L1'. Such excessive forces can cause a deformation in a way that a longitudinal axis of the busbar holder 4a becomes arc shaped. For example, this may happen if more than one busbar L1, L1' with the same voltage level is arranged in a busbar holder 4a like this is the case in the example shown in Figs. 5 and 6. During short circuit, the busbars L1, L1' of a busbar holder 4a are exposed to different forces what leads to an asymmetric load on the busbar holder 4a. If the busbars L1, L1' are forced sidewards in different directions, a torque is induced in the busbar holder 4a. If this torque is very high, there is a risk that the fixing of the busbar holder 4a in the holder rail 2a fails what in turn causes said bending of the busbar holder 4a. Accordingly, the elevation or ridge D moves towards the busbar L1, L1'. Once the elevation D touches the busbar L1, L1', a further deformation of the busbar holder 4a is avoided or at least hindered. So, the elevation D does also act as a hard stop for the busbar holder 4a itself. Beneficially, the rounded corners E avoid the formation of cracks in the corners of the cutout B, not only but particularly in this scenario. So, the mounting system 1 is fault tolerant very much and even a failing or missing fixing of the busbar holder 4a does not lead to a collapse of the whole mounting system 1.

Generally, the busbar holders 4a can be coated/painted in order to reduce friction between the busbar holders 4a and the busbars L1..L3, L1', N, to provide electrical isolation and/or to mark each electrical phase with a separate color. For example the busbar N can have blue color, the busbar L1 can have brown color and so on. In order to provide a better adhesion of the coating, the base material of the busbar holder 4a can have a rough surface. Such a rough surface can be made by sandblasting for example, but also by means of a laser, which burns small pits into the surface of the base material of the busbar holder 4a. In particular, the same laser can be used, which is also used for cutting the cutout B. It is also possible, that only surfaces of the busbar holder 4a are provided with these pits which potentially get into contact with other parts. Hence, in particular the edges of the cutouts B can be provided with pits to locally improve adhesion there.

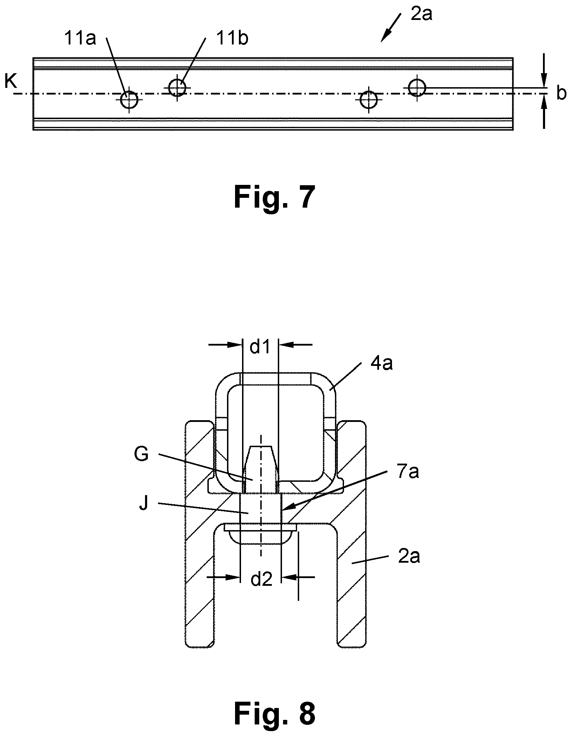

The mounting of the busbar holder 4a to the holder rail 2a is now explained in more detail by additional use of Figs. 7 and 8. Fig. 7 shows a top view of an exemplary holder rail 2a, and Fig. 8 shows a cross sectional view of the busbar holder 4a mounted to the holder rail 2a.

Advantageously, the holder rail 2a can be a strut profile with an H cross section like this is the case in the Figs. In this way, on the one hand, the busbar holder 4a can be received in one opening of the "H" and means for mounting the busbar holders 4a, e.g. busbar holder screws 7a, 7b or rivets, can be received in the opposite opening of the "H". So, in particular the heads of the mounting means, e.g. the heads of the busbar holder screws 7a, 7b or rivets, are located in a groove so as to provide protection against unintentional contact by personnel. It should be noted in this context, that mounting means can be under voltage if they are made from metal, if no other measures are be taken to avoid that. Moreover, a H cross section beneficially provides good stiffness against deflection. It should be noted that although the use of a H profile is beneficial, other shapes can be uses as well for the holder rail 2a. For example, the holder rails 2a can have a U cross section or a square pipe cross section.

It is also of advantage, if the H cross section of the holder rail 2a comprises grooves F on both sides of the bottom region facing the busbar holder 4a like this is shown in Figs. 6 and 8. In particular, optional protrusions on the busbar holders 4a or on other equipment, which can be fixed to the holder rail 2a, can reach into the grooves F. Hence a busbar holder 4a or other equipment can be snapped in a holder rail 2a so that it does not fall out of the holder rail 2a unintentionally until the busbar holder 4a or other equipment is finally fixed to the holder rail 2a by mounting means, e.g. by busbar holder screws 7a, 7b or rivets. This is particularly helpful if a busbar holder 4a, 4b or other equipment shall be mounted to a holder rail 2a, 2b upside down what is the case for the upper busbar holders 4b in Figs. 1 and 2.

Advantageously, the mounting means for the busbar holder 4a are located at different distances b from and/or at different sides of a longitudinal axis K of the holder rail 2a, which said busbar holder 4a is fixed to like this is the case in the example shown in the Figs. In this context, Fig. 4 shows displaced busbar holder holes 10a, 10b and Fig. 7 shows displaced holder rail holes 11a, 11b. By use of these measures, the risk for crack formation in the holder rail 2a can be reduced.

Advantageously, the busbar holder 4a can be fixed to the holder rail 2a by mounting means, which are embodied as self-cutting busbar holder screws 7a, 7b like this is depicted in Fig. 8. The use of self-cutting busbar holder screws 7a, 7b provides a number of advantages. First, no separate thread has to be cut into the busbar holder 4a because a self-cutting busbar holder screw 7a, 7b cuts the thread itself. Second, a self-cutting busbar holder screw 7a, 7b does not turn out on its own easily, even if the mounting system is exposed to vibrations like they occur within a switchgear. Hence, an additional screw locking can be omitted. Third, self-cutting busbar holder screws 7a, 7b can be made shorter than screws, which are fixed by a nut. Accordingly, even if a busbar holder screw 7a, 7b falls off from the mounting system 1, the likelihood for an arc flash or short circuit caused by the busbar holder screws 7a, 7b is comparably low. This is based on the simple reason that a self-cutting busbar holder screw 7a, 7b is shorter than a screw fixed by a nut and cannot bridge large gaps between conductors under voltage.

Advantageously, the self-cutting busbar holder screw 7a, 7b has a threaded portion G and an unthreaded portion J, wherein the outer diameter d1 of the threaded portion is smaller than the diameter d2 of the unthreaded portion J and wherein the threaded portion G is screwed into the busbar holder 4a and the unthreaded portion J is located within the holder rail 2a. In detail, the threaded portion G is screwed into a busbar holder hole 10a, 10b of the busbar holder 4a and the unthreaded portion J is located in a holder rail hole 11a, 11b of the holder rail 2a. Because the diameter d2 of the unthreaded portion J is comparably large, a surface pressure on and a shear stress in the holder rail 2a are comparably low so that high forces can be transferred between the busbar holder screws 7a, 7b and the holder rail 2a. This is true even though the holder rail 2a is made of plastic. A busbar holder screw 7a, 7b as defined hereinbefore can also be seen as a kind of a shoulder screw.

Alternatively, the busbar holder 4a can be fixed to the holder rail 2ab by mounting means, which are embodied as rivets, in particular as snap in rivets. In this way, the assembly of the mounting means always can happen from above, even if the busbar holder 4a, 4b is oriented in the upright position like this is the case for the lower busbar holder 4a. In this case, the rivet is inserted through the cutout D in the busbar holder 4a, and the head of the rivet is located within the busbar holder 4a in the mounted state. If the busbar holder 4a, 4b is oriented upside down like this is the case for the upper busbar holder 4b, then the rivet is inserted through a mounting hole 11a, 11b in the upper holder rail 2b. In neither case, the rivet can fall off by accident easily.

Generally, it is of advantage if the width of the busbar holder 4a is slightly below the inside dimension of the H cross section of the holder rail 2a. Accordingly, the busbar holder 4a can be mounted to the holder rail 2a easily. However, it could also be useful if the width of the busbar holder 4a is slightly above the inside dimension of the H cross section of the holder rail 2a. A busbar holder 4a is held in a holder rail 2a by friction then. So, the busbar holder 4a does not fall out of the holder rail 2a unintentionally until the busbar holder 4a is finally fixed to the holder rail 2a by mounting means, e.g. by busbar holder screws 7a, 7b or rivets. This is particularly helpful if a busbar holder 4a or other equipment shall be mounted to a holder rail 2a upside down like this is the case for the busbar holder 4b. In any case where the width of the busbar holders 4a, 4b matches the inside dimension of the H cross section, a rotation of the busbar holder 4a is avoided, even if just a single busbar holder screw 7a, 7b is used to fix the busbar holder 4a, 4b or even if mounting means for the busbar holder 4a, 4b, e.g. by busbar holder screws 7a, 7b or rivets, unintentionally fall of the mounting system 1 during operation. So, the mounting system 1 is fault tolerant very much, and the holder rail 2a acts as a kind of an assembly jig during assembly what eases manufacturing the mounting system 1.

It should be noted at this point that the upper holder rail 2b looks the same as the lower holder rail 2a. Hence, the technical disclosure presented in the context of the lower holder rail 2a equally applies to the upper holder rail 2b. The very same counts for the lower and upper busbar holders 4a, 4b.

Fig. 14 finally shows a side view of a cut out of an electrical switchgear 12, which comprises a number of busbars L1..L3, L1', N, a frame 13 and a switching device 14 electrically connected to the busbars L1..L3, L1', N. By use of the mounting system 1, the busbars L1..L3, L1', N are held in position within the electrical switchgear 12. In particular, the mounting system 1 can be fixed to the frame 13 by means of the frame connectors 5a, 5b and the frame connector screws 9a, 9b.

Because of the material choice for the holder rails 2a, 2b and the busbar holders 4a, 4b, that is, because the holder rails 2a, 2b are made of plastic and the busbar holders 4a, 4b are made of metal, the busbar holders 4a, 4b are comparably robust and easily withstand the forces occurring in a switchgear 12. This is contrary to prior art solution where the holder rails 2a, 2b are made of metal and the busbar holders 4a, 4b are made of plastic.

Because the contact surface between a busbar holder 4a, 4b and a holder rail 2a, 2b is comparably large, in addition those high forces can easily be transferred from the busbar holder 4a, 4b to the holder rail 2a, 2b, despite the fact that the holder rail 2a, 2b is made from plastic. Moreover, the holder rail 2a, 2b provides electrical insulation and hence also avoids induced currents or eddy currents caused by the current through the busbars L1..L3, L1', N. A closed ferrous material loop around the busbars L1..L3, L1', N is avoided naturally by the non-ferrous material of the proposed holder rail 2a, 2b. This is not the case for prior art holder rails 2a, 2b made of metal where special measures have to be taken to avoid such a ferrous material loop and to avoid or at least limit said eddy currents.

### LIST OF REFERENCE NUMERALS

- 1: mounting system
- 2a, 2b: holder rail
- 3a, 3b: connection profile
- 4a, 4b: busbar holder
- 5a, 5b: frame connector

- 6: arrangement
- 7a, 7b: busbar holder screws
- 8a, 8b: connection profile screws
- 9a, 9b: frame connector screws
- 10a, 10b: busbar holder holes

- 11a, 11b: holder rail holes
- 12: switchgear
- 13: switchgear frame
- 14: switching device

- B: cutout
- C: convex/curved section
- D: elevation
- E: rounded corner
- F: groove in holder rail
- G: threaded portion

- J: unthreaded portion
- K: holder rail axis
- L1..L3, L1', N: busbar
- b: distance between busbar holder screw and holder rail axis
- d1: outer diameter of the threaded portion
- d2: diameter of the unthreaded portion
- h: height difference

## Claims

1. Mounting system (1) for busbars (L1..L3, L1', N) of an electrical switchgear (12), comprising
- a plurality of holder rails (2a, 2b) made of plastic,
- connection profiles (3a, 3b) to interconnect the holder rails (2a, 2b) and to effect a distance between the holder rails (2a, 2b) and
- a plurality of busbar holders (4a, 4b) made of metal, which are provided to receive the busbars (L1..L3, L1', N) and which are arranged in the holder rails (2a, 2b),
**characterized in that**
- the busbar holders (4a, 4b) are strut profiles with a square pipe cross section and with cutouts (B) for the busbars (L1..L3, L1', N).

2. Mounting system (1) according to claim 1, **characterized in that** the holder rails (2a, 2b) are strut profiles with an H cross section.

3. Mounting system (1) according to claim 2, **characterized in that** H cross section of the holder rails (2a, 2b) comprises grooves (F) on both sides of the bottom region facing the busbar holders (4a, 4b).

4. Mounting system (1) according to any one of claims 1 to 3, **characterized in that** a top region of the cutout (B) has convex or curved sections (C) on both sides.

5. Mounting system (1) according to any one of claims 1 to 3, **characterized in that** a bottom region of the cutout (B) has a flat or convex elevation (D) with rounded corners (E) on both sides of the elevation (D).

6. Mounting system (1) according to claim 5, **characterized in that** the holder rails (2a, 2b) in the mounted state of the mounting system (1) reach over the elevations (D) of the busbar holders (4a, 4b).

7. Mounting system (1) according to any one of claims 1 to 6, **characterized in that** the busbar holders (4a, 4b) are fixed to the holder rails (2a, 2b) by mounting means, which are embodied as self cutting busbar holder screws (7a, 7b).

8. Mounting system (1) according to claim 7, **characterized in that** a self cutting busbar holder screw (7a, 7b) of the self cutting busbar holder screws (7a, 7b) has a threaded portion (G) and an unthreaded portion (J), wherein the outer diameter (d1) of the threaded portion is smaller than the diameter (d2) of the unthreaded portion (J) and wherein the threaded portion (G) is screwed into a busbar holder (4a, 4b) of the busbar holders (4a, 4b) and the unthreaded portion (J) is located within a holder rail (2a, 2b) of the holder rails (2a, 2b).

9. Mounting system (1) according to any one of claims 1 to 6, **characterized in that** the busbar holders (4a, 4b) are fixed to the holder rails (2a, 2b) by mounting means, which are embodied as rivets, in particular as snap in rivets.

10. Mounting system (1) according to any one of claims 1 to 9, **characterized in that** mounting means for a busbar holder (4a, 4b) of the busbar holders (4a, 4b) are located at different distances (b) from and/or at different sides of a longitudinal axis (K) of the holder rail (2a, 2b), which said busbar holder (4a, 4b) is fixed to.

11. Mounting system (1) according to any one of claims 2 to 10, **characterized in that** width of the busbar holders (4a, 4b) is slightly below the inside dimension of the H cross section of the holder rail (2a, 2b).

12. Arrangement (6), **characterized in** a plurality of busbars (L1..L3, L1', N) and a mounting system (1) according to any one of the claims 1 to 11, by which the busbars (L1..L3, L1', N) are fixed.

13. Electrical switchgear (12), comprising
- a number of busbars (L1..L3, L1', N) and
- at least one switching device (14) electrically connected to the busbars (L1..L3, L1', N),
**characterized in**
- a mounting system (1) according to any one of the claims 1 to 11, by which the busbars (L1..L3, L1', N) are held in position within the electrical switchgear (12).

## Patentansprüche

1. Montagesystem (1) für Sammelschienen (L1..L3, L1', N) einer elektrischen Schaltanlage (12), umfassend
- eine Vielzahl von Halteschienen (2a, 2b) aus Kunststoff,
- Verbindungsprofile (3a, 3b) zum Verbinden der Halteschienen (2a, 2b) untereinander und zum Bewirken einer Distanz zwischen den Halteschienen (2a, 2b) und
- eine Vielzahl von Sammelschienenhaltern (4a, 4b) aus Metall, die zur Aufnahme der Sammelschienen (L1..L3, L1', N) bereitgestellt werden und die in den Halteschienen (2a, 2b) angeordnet sind,
**dadurch gekennzeichnet, dass**
- die Sammelschienenhalter (4a, 4b) Strebenprofile mit quadratischem Rohrquerschnitt und mit Ausschnitten (B) für die Sammelschienen (L1..L3, L1', N) sind.

2. Montagesystem (1) nach Anspruch 1, **dadurch gekennzeichnet, dass** die Halteschienen (2a, 2b) Strebenprofile mit einem H-Querschnitt sind.

3. Montagesystem (1) nach Anspruch 2, **dadurch gekennzeichnet, dass** der H-Querschnitt der Halteschienen (2a, 2b) Nuten (F) auf beiden Seiten des unteren Bereichs gegenüberliegend den Sammelschienenhaltern (4a, 4b) umfasst.

4. Montagesystem (1) nach einem der Ansprüche 1 bis 3, **dadurch gekennzeichnet, dass** ein oberer Bereich des Ausschnitts (B) auf beiden Seiten konvexe oder gekrümmte Abschnitte (C) aufweist.

5. Montagesystem (1) nach einem der Ansprüche 1 bis 3, **dadurch gekennzeichnet, dass** ein unterer Bereich des Ausschnitts (B) eine flache oder konvexe Erhebung (D) mit abgerundeten Ecken (E) auf beiden Seiten der Erhebung (D) aufweist.

6. Montagesystem (1) nach Anspruch 5, **dadurch gekennzeichnet, dass** die Halteschienen (2a, 2b) im montierten Zustand des Montagesystems (1) die Erhebungen (D) der Sammelschienenhalter (4a, 4b) übergreifen.

7. Montagesystem (1) nach einem der Ansprüche 1 bis 6, **dadurch gekennzeichnet, dass** die Sammelschienenhalter (4a, 4b) an den Halteschienen (2a, 2b) durch Montagemittel befestigt sind, die als selbstschneidende Sammelschienenhalterschrauben (7a, 7b) ausgeführt sind.

8. Montagesystem (1) nach Anspruch 7, **dadurch gekennzeichnet, dass** eine selbstschneidende Sammelschienenhalterschraube (7a, 7b) der selbstschneidenden Sammelschienenhalterschrauben (7a, 7b) einen mit Gewinde versehenen Teil (G) und einen gewindelosen Teil (J) aufweist, wobei der Außendurchmesser (d1) des mit Gewinde versehenen Teils kleiner ist als der Durchmesser (d2) des gewindelosen Teils (J) und wobei der mit Gewinde versehene Teil (G) in einen Sammelschienenhalter (4a, 4b) der Sammelschienenhalter (4a, 4b) eingeschraubt ist und der gewindelose Teil (J) sich in einer Halteschiene (2a, 2b) der Halteschienen (2a, 2b) befindet.

9. Montagesystem (1) nach einem der Ansprüche 1 bis 6, **dadurch gekennzeichnet, dass** die Sammelschienenhalter (4a, 4b) durch Montagemittel, die als Nieten, insbesondere als Einpressnieten, ausgeführt sind, an den Halteschienen (2a, 2b) befestigt sind.

10. Montagesystem (1) nach einem der Ansprüche 1 bis 9, **dadurch gekennzeichnet, dass** sich Montagemittel für einen Sammelschienenhalter (4a, 4b) der Sammelschienenhalter (4a, 4b) in unterschiedlichen Distanzen (b) von und/oder an unterschiedlichen Seiten einer Längsachse (K) der Halteschiene (2a, 2b) befinden, an der der Sammelschienenhalter (4a, 4b) befestigt ist.

11. Montagesystem (1) nach einem der Ansprüche 2 bis 10, **dadurch gekennzeichnet, dass** die Breite der Sammelschienenhalter (4a, 4b) geringfügig kleiner ist als die Innenabmessung des H-Querschnitts der Halteschiene (2a, 2b).

12. Anordnung (6), **gekennzeichnet durch** eine Vielzahl von Sammelschienen (L1..L3, L1', N) und ein Montagesystem (1) nach einem der Ansprüche 1 bis 11, durch das die Sammelschienen (L1..L3, L1', N) befestigt sind.

13. Elektrische Schaltanlage (12), umfassend
- eine Anzahl von Sammelschienen (L1..L3, L1', N) und
- mindestens eine elektrisch mit den Sammelschienen (L1..L3, L1', N) verbundene Vorrichtung zum Schalten (14),
**gekennzeichnet durch**
- ein Montagesystem (1) nach einem der Ansprüche 1 bis 11, durch das die Sammelschienen (L1..L3, L1', N) innerhalb der elektrischen Schaltanlage (12) in Position gehalten werden.

## Revendications

1. Système de montage (1) pour barres omnibus (L1..L3, L1', N) d'un appareil de commutation (12) électrique, comprenant
- une pluralité de rails porteurs (2a, 2b) en matière plastique,
- des profilés de raccordement (3a, 3b) pour relier les rails porteurs (2a, 2b) les uns aux autres et pour modifier la distance entre les rails porteurs (2a, 2b), et
- une pluralité de supports de barres omnibus (4a, 4b) en métal, lesquels sont destinés à recevoir les barres omnibus (L1..L3, L1', N) et disposés dans les rails porteurs (2a, 2b),
**caractérisé en ce que**
- les supports de barres omnibus (4a, 4b) sont des profilés entretoises comportant une section transversale tubulaire carrée et des découpes (B) pour les barres omnibus (L1..L3, L1', N).

2. Système de montage (1) selon la revendication 1, **caractérisé en ce que** les rails porteurs (2a, 2b) sont des profilés entretoises comportant une section transversale en H.

3. Système de montage (1) selon la revendication 2, **caractérisé en ce que** la section transversale en H des rails porteurs (2a, 2b) comprend des rainures (F) des deux côtés de la zone inférieure faisant face aux supports de barres omnibus (4a, 4b).

4. Système de montage (1) selon l'une quelconque des revendications 1 à 3, **caractérisé en ce qu'**une zone supérieure de la découpe (B) comporte des sections (C) convexes ou incurvées des deux côtés.

5. Système de montage (1) selon l'une quelconque des revendications 1 à 3, **caractérisé en ce qu'**une zone inférieure de la découpe (B) comporte une élévation (D) plate ou convexe comportant des coins (E) arrondis des deux côtés de l'élévation (D).

6. Système de montage (1) selon la revendication 5, **caractérisé en ce que** les rails porteurs (2a, 2b) à l'état monté du système de montage (1) dépassent les élévations (D) des supports de barres omnibus (4a, 4b).

7. Système de montage (1) selon l'une quelconque des revendications 1 à 6, **caractérisé en ce que** les supports de barres omnibus (4a, 4b) sont fixés aux rails porteurs (2a, 2b) par des moyens de montage, lesquels sont incorporés sous la forme de vis (7a, 7b) autocoupantes de support de barre omnibus.

8. Système de montage (1) selon la revendication 7, **caractérisé en ce qu'**une vis (7a, 7b) autocoupante de support de barre omnibus des vis (7a, 7b) autocoupantes de support de barre omnibus comporte une partie filetée (G) et une partie non filetée (J), dans lequel le diamètre extérieur (d1) de la partie filetée est inférieur au diamètre (d2) de la partie non filetée (J) et dans lequel la partie filetée (G) est vissée dans un support de barre omnibus (4a, 4b) des supports de barres omnibus (4a, 4b) et la partie non filetée (J) est située dans un rail porteur (2a, 2b) des rails porteurs (2a, 2b).

9. Système de montage (1) selon l'une quelconque des revendications 1 à 6, **caractérisé en ce que** les supports de barres omnibus (4a, 4b) sont fixés aux rails porteurs (2a, 2b) par des moyens de montage, lesquels sont intégrés sous forme de rivets, en particulier de rivets encliquetables.

10. Système de montage (1) selon l'une quelconque des revendications 1 à 9, **caractérisé en ce que** les moyens de montage pour un support de barre omnibus (4a, 4b) des supports de barres omnibus (4a, 4b) sont situés à différentes distances (b) et/ou de différents côtés d'un axe longitudinal (K) du rail porteur (2a, 2b), auquel ledit support de barre omnibus (4a, 4b) est fixé.

11. Système de montage (1) selon l'une quelconque des revendications 2 à 10, **caractérisé en ce que** la largeur des supports de barres omnibus (4a, 4b) est légèrement inférieure à la dimension intérieure de la section transversale en H du rail porteur (2a, 2b).

12. Ensemble (6), **caractérisé par** une pluralité de barres omnibus (L1..L3, L1', N) et un système de montage (1) selon l'une quelconque des revendications 1 à 11, au moyen duquel les barres omnibus (L1..L3, L1', N) sont fixées.

13. Appareil de commutation (12) électrique, comprenant
- un nombre de barres omnibus (L1..L3, L1', N) et
- au moins un dispositif de commutation (14) connecté électriquement aux barres omnibus (L1..L3, L1', N),
**caractérisé par**
- un système de montage (1) selon l'une quelconque des revendications 1 à 11, au moyen duquel les barres omnibus (L1..L3, L1', N) sont maintenues en position dans l'appareil de commutation (12) électrique.
